# EUROPEAN PATENT SPECIFICATION

(11) **EP 3 335 796 B1**
(45) Date of publication and mention of the grant of the patent: **29.05.2019**
(21) Application number: 17460062.7
(22) Date of filing: 14.09.2017
(51) Int. Cl.: B03B 9/06

(54) **METHOD OF RECYCLING AND RETRIEVAL OF RAW MATERIALS FROM HOME APPLIANCES, HOME ELECTRONICS AND THEIR WASTE, AND THE PROCESSING LINE TO EXECUTE THIS METHOD**
VERFAHREN ZUR WIEDERVERWENDUNG UND ZUM WIEDERAUFFINDEN VON ROHSTOFFEN AUS HAUSHALTSGERÄTEN, ELEKTRONISCHE HAUSHALTSGERÄTE UND IHR ABFALL, UND FERTIGUNGSLINIE ZUR DURCHFÜHRUNG DES VERFAHRENS
PROCÉDÉ DE RECYCLAGE ET DE RÉCUPÉRATION DE MATIÈRES PREMIÈRES D'APPAREILS ÉLECTROMÉNAGERS, D'APPAREILS ÉLECTRONIQUES DOMESTIQUES ET DE LEURS DÉCHETS ET LIGNE DE TRAITEMENT POUR LA MISE EN UVRE DE CE PROCÉDÉ

(30) Priority: 16.12.2016 PL 41984216
(43) Date of publication of application: 20.06.2018
(73) Proprietor: "SIGLO" Spólka z ograniczona odpowiedzialnoscia, 04-760 Warszawa (PL)
(72) Inventor: Turowski, Lukasz, 04-760 Warszawa (PL); Belczewski, Jan, 04-760 Warszawa (PL)
(74) Representative: Basa, Grazyna

(56) References cited:
- WO-A1-00/72972
- WO-A1-2006/021013
- DE-A1- 4 100 346
- US-A- 4 362 276

## Description

The subject of this invention is a method of recycling and recovery of raw materials from home appliances, home electronics and waste thereof, and the process line to execute this method.

Growing amounts of waste in the form of waste electric and electronic equipment (WEEE) require the use of increasingly efficient recycling and recovery technologies which are to ensure the high quality and quantity output of the process. An especially important aspect is the precise separation of metallic and non-metallic (polymer) fractions.

Known processes of recycling of raw material waste in the form of electric and electronic waste (WEEE) cover mainly the basic processes of sorting, shredding and magnetic separation, they do not, however, ensure a precise separation of metals, non-metals, polymers, noble metals and hazardous substances and materials. There are also known solutions which are dedicated predominantly to large appliances (home electronics and home appliances waste).

For example, the patent descriptions DE4415472A1, DE19600647A1, DE102005028635A1, EP0512229A2, EP0623390A1, EP1727629B1, US4718559A, GB2398298A, US2007054106A1, WO9414542A1, WO2006021013A1, WO00/72972A1 and WO 201268744A2 present various processing lines for rough recovery of selected metals. The recycling process in the above-mentioned solutions usually consists of rough sorting, shredding and separation, performed in various combinations.

The problem of such processes is the low profitability of recovery of useful raw materials which are present in such waste in low volumes. As a result, the waste recycling processes are simplified, and therefore a large portion of the waste remains untreated and is directed to the landfill, thus contributing to environmental pollution. Another problematic aspect is the attainment of high effectiveness of the process with simultaneous decrease of recycling process costs. Lack of a solution in the form of comprehensive processing of home appliance and home electronic waste performed in a single place causes the processing plants, specializing in recycling of one category of waste only, to send all other raw materials they deem worthless to a landfill, which eventually does not solve the waste management problem.

The aim of this invention is a comprehensive preparation of a method of recycling and recovery of raw materials from home electronics, home appliances and waste thereof which will limit the amount of waste to the minimum by recovery of raw materials useful for further processing, and will thus contribute to the protection of natural environment. The aim of this invention is also the preparation of a comprehensive process line to execute this method, which will ensure the processing of used home electronics and home appliances, devices and equipment from the moment of their delivery to the processing plant up to their almost complete processing.

The method of recycling and recovery of raw materials from home electronics and home appliances, devices and equipment, which provides for the sorting, weighing and separation into the groups of small waste electric and electronic equipment, CRT and LCD TV sets and monitors, electric cables and bundles, cells and batteries, large waste electric and electronic equipment and remaining waste, where the large waste electric and electronic equipment, batteries and cells and remaining waste are transferred to specialized processing plants, while the small waste electric and electronic equipment, CRT and LCD TV sets and monitors, cables and electric bundles are subject to further processing, is characterised in that the processes are organized into three inter-cooperating processing lines, i.e. for the small waste electric and electronic equipment, electric cables and bundles, and the CRT and LCD TV and monitor lines, whereas
the small waste electric and electronic equipment directed to the small waste electric and electronic equipment processing line is initially shredded to size 50-100 mm, then such shredded fraction is subject to magnetic separation during which the ferrous metallic fraction is preliminarily separated; then the remaining waste material is subjected to granulation to size 20-30 mm and is again subjected to magnetic separation, after which the remaining waste material is milled and granulated to size 8 to 20 mm, then subjected to eddy current separation during which the aluminium fraction is separated, while the dust originating from granulation and milling is removed through a dust collection installation, after which the dusts and waste material originating from the eddy current separation are subjected to wet separation in a set of coupled vibrating and oscillating tables operating in closed cycle with recovery of the operating medium, as a result of which the polymer fraction and the concentrate of noble metals are separated, and these fractions are directed to specialized processing plants, whereas
- electric cables and bundles are directed to the electric cable and bundle recycling line, shredded to size 5 to 50 mm, then subjected to magnetic separation during which the ferrous metallic fraction is separated, while the remaining waste material is milled and granulated to size 0.5-2 mm, after which the granules are processed in the vibrating air separator, where the polymer fraction is separated, while the remaining waste material and dust collected during shredding, milling and separation are collected by the dust collection installation, and then the collected dusts and waste material generated in the vibration air separation are subjected to wet separation in the coupled vibrating and oscillating table station operating in closed cycle with recovery of the operating medium, as a result of which the polymer fraction and the purified copper granules are separated and are then directed to specialized processing plants, whereas
- CRT and LCD TV sets and monitors are directed to the CRT and LCD TV sets and monitors recycling line, manually disassembled, and the electric cables and bundles generated in this way are directed to the electric cables and bundles recycling line where they are subjected to further processing consistent with this invention, while the recovered small electric and electronic elements are directed to the small waste electric and electronic equipment recycling line, where they are subjected to further processing consistent with this invention, the plastic casings and covers are directed to specialized processing plants, while the screen parts of displays and monitors have the phosphor sucked out and directed to specialized processing plants, while the remaining cleaned screen glass is directed to specialized processing plants. Preferably, the process of dust collection in the small waste electric and electronic equipment line and in the electric cables and bundles processing line is guided centrally in a common dust removal installation. Preferably, the process of wet separation in the small waste electric and electronic equipment processing line and the electric cables and bundles processing line is performed on a single station, in a set of vibrating and oscillating tables operating in a closed cycle with recovery of operating medium.

The processing line for recycling and recovery of raw materials from home electronics, home appliances and waste thereof, containing a line for pre-sorting and a line for mechanical waste processing, equipped with devices for shredding, separation, granulation, as well as transporters and water washers, consistent with the invention is characterized in that the pre-sorting line is connected with three processing lines, i.e. the small waste electric and electronic equipment processing line, electric cables and bundles processing line and the CRT and LCD TV and monitor processing line, whereas the small waste electric and electronic equipment processing line and the electric cables and bundles processing lines are interconnected by dust collection lines which constitute a part of the central dust collection system and by a common wet separation station, consisting of a set of oscillating water tables, and the CRT and LCD TV sets and monitors processing line is connected with the small waste electric and electronic equipment processing line by a node for feeding this line with waste material in the form of electric bundles and cables. Preferably, this small waste electric and electronic equipment processing line includes a preliminary shredder which is connected with the magnetic separator, which is connected with a high-speed mill shredder, which in turn is connected with another magnetic separator, and this separator is connected with a granulating mill, which is connected to the eddy current separator, which is connected with a group of a set of at least two coupled oscillating water tables with vibrating-bumper drive, closed-cycle infrastructure and operating medium recovery. Preferably, the high-speed mill shredder and the granulating mill are connected by the dust collecting line with the common dust collecting installation, from which the dust is fed to the coupled oscillating water tables station. Preferably, the electric cables and bundles processing lines has a high-speed mill shredder which is connected to the magnetic separator, which in turn is connected with the granulating mill, which in turn is connected with the feeder supported by a fan, and further the feeder is connected to the vibrating air separator which is connected with a set of at least two coupled oscillating water tables with vibrating-bumper drive, closed-cycle infrastructure and operating medium recovery. Preferably, the high-speed mill shredder and the vibrating air separator through a dust collection line are connected to the common dust collection installation, from which the dust is fed to the set of coupled oscillating water tables. Preferably, the CRT and LCD TV sets and monitors processing line has at least one station for manual disassembly of parts and segregation into cathode ray tubes, small electronic elements, electric cables and bundles and casings, whereas in the scope of small electronic elements this line is connected with the small waste electric and electronic equipment processing line, and in the scope of electric cables and bundles this line is connected with the electric cables and bundles processing line, whereas the recovered cathode ray tubes are directed to the cone top removal station, and later to the phosphor suction station, from where they are transferred to the warehouse as cullet.

The method and process line consistent with this invention allows to achieve very high effectiveness of recycling of Waste Electric and Electronic equipment, especially small ones. This process leaves practically no outgoing waste, which is of special significance for the protection of environment. As a result of the process, additional intermediate products are obtained to be used in other production processes. This solution is especially important for the recycling of selected waste in the form of small waste electronic and electric equipment, such as computer equipment, printers, telecommunication devices, antennas, phones, facsimiles, routers, switches, audio-visual equipment such as radios, tape recorders, cameras as well as small household appliances, such as kettles, irons, coffee machines.

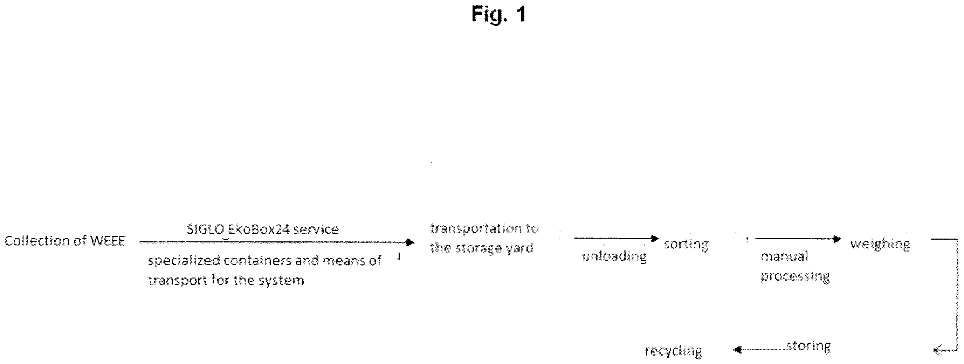

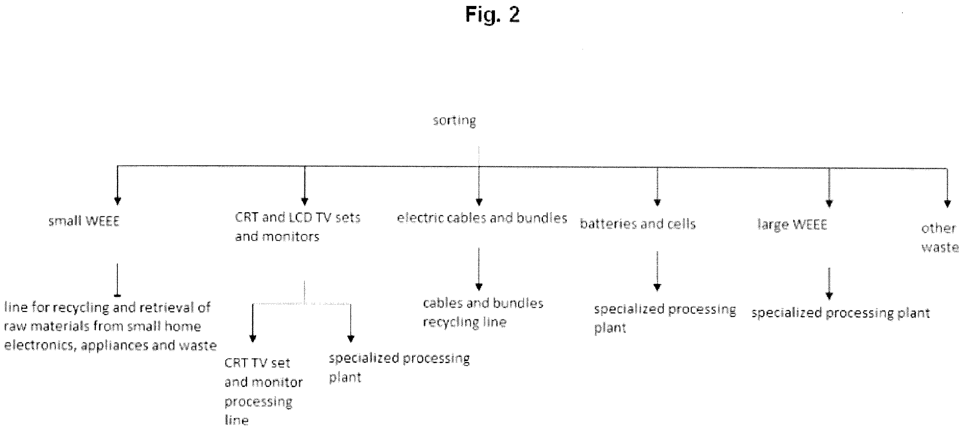

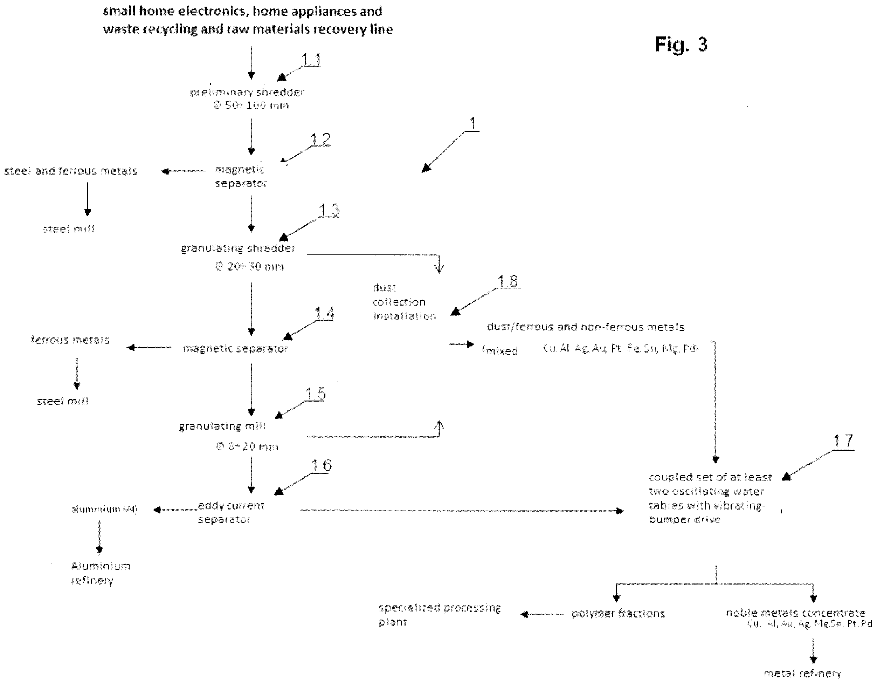

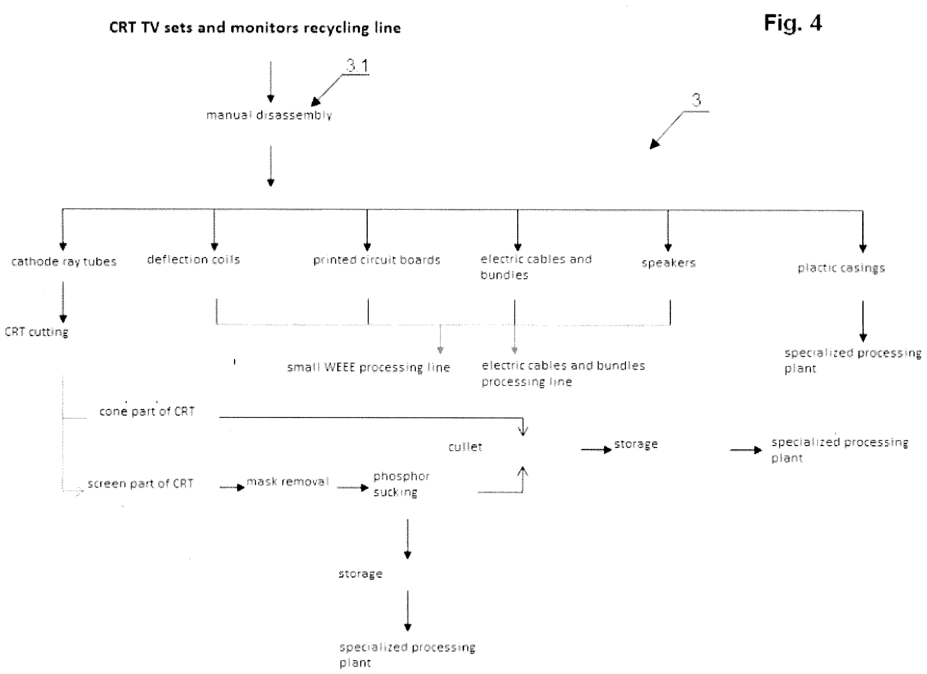

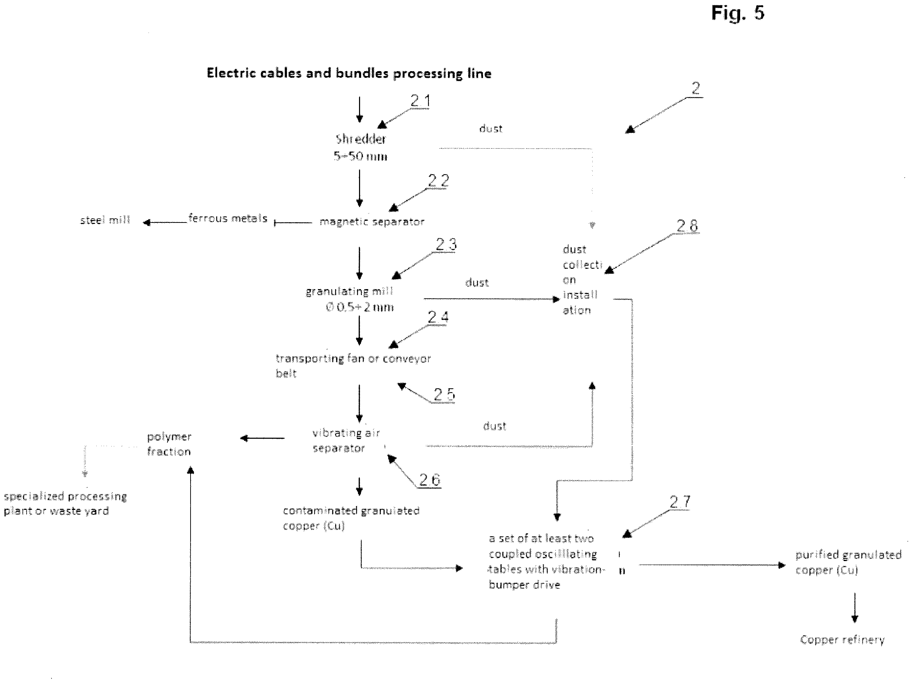

The solution consistent with this invention is presented in embodiments in the illustration where Fig. 1 presents the flowchart of preliminary activities related to the collection and preparation of waste for recycling, Fig. 2 presents the flowchart of a part of the line in the scope of preliminary sorting of waste, Fig. 3 shows the chart of the part of the line in the scope of processing line for recycling and recovery of materials from small waste electric and electronic equipment, audio-visual devices and home appliances, Fig. 4 shows the chart of a part of the line in the scope of processing sequence for the recycling of CRT TV sets and monitors, while Fig. 5 presents the chart of a part of the line in the scope of the processing sequence for the electric cables and bundles.

In the embodiment, the process line for the recycling and recovery of materials from waste electric and electronic equipment comprises three process lines, i.e. Line 1 for recycling and recovery of small home electronics and appliances and waste thereof, in short referred to as small waste electric and electronic equipment, Line 2 for the recycling of electric cables and bundles, and Line 3 for the recycling of CRT TV sets and monitors, which has at least one station 3.1 for manual disassembly of parts, whereas this line is party connected to Line 2 for the recycling of electric cables and bundles and with Line 1 for the processing of small waste electric and electronic equipment.

On the Line 1 for the processing of small waste electric and electronic equipment, the waste material is transported to a slow-speed rotating device called the preliminary shredder 1.1, they are shredded by crushing, breaking, separation and tearing. The fraction resulting from this process, called the heavy fraction, consists of ferrous metals, non-ferrous metals and polymers, with one element measuring between minimum 50 mm and maximum 100 mm. The initially processed waste material is transported then by a conveyor belt, which is not included in the picture, to the magnetic separator 1.2. The preferred solution from the point of view of the efficiency of the process is a crossbelt suspended belt magnet, whereas it is also possible to use tube, grid and drum separators. Steel and other ferrous metals are separated from the waste mass. The magnetically separated elements are then directed by a conveyor belt, which is not shown in the illustration to storage containers, and after labelling they are transported to the ready product warehouse or the storage yard. Finally the metal fraction material, i.e. steel, stainless steel, iron, cast iron, ferrite and other ferrous metals is processed in steel mills to the form of a commercial product. The remaining waste product is transported to the high-speed mill shredder 1.3 for preliminary shredding (cutting). The station is equipped with exchangeable sieves with round or rectangular openings the diameter (size) of which is selected depending on the type of processed waste. The fraction acquired in this way is called the light fraction and consists of ferrous and non-ferrous metals and polymers, where a single element has size 20 to 30 mm. Then, the magnetic separation is conducted again in the magnetic separator 1.4. The preferred solution from the point of view of the efficiency of the process is a crossbelt suspended belt magnet, whereas it is also possible to use tube, grid and drum separators. Ferrous metals are separated from the waste mass. In order to achieve precise granulation and homogeneity of waste material, the granulating mill 1.5 is used. The milling produces a waste mass with a single element size of 8 to 20 mm, ensuring a reasonably homogeneous content throughout the whole mass, which allows to perform the proper separation. To this end, the waste material stream is transported on a conveyor belt to the eddy current separator 1.6. The regulation of operating parameters of the devise is performed with variable frequency drives. The control system of the device ensures the regulation of efficiency of vibration feeder, rotation rate of the magnetic roll and the speed of the conveyor belt. The use of an accelerating conveyor belt, not shown in the picture, is aimed to ensure an even single-layer distribution of material within the area of operation of the magnetic rotor. The aim of this operation is to separate the aluminium fraction from the waste product mass. After the aluminium fraction is placed in storage containers and labelled, it is transported to the ready product warehouse. This fraction will be processed in aluminium refineries into commercial product. Then the waste material product, devoid of ferrous metals and aluminium, consisting of light and thin inclusions of non-ferrous metals, low-density polymers, elastomers, impurities e.g. in the form of paper, duct tape, insulating films and dust are directed to a coupled set of at least two wet oscillating tables 1.7 with vibrating-bumper drive, closed-cycle infrastructure and operating medium recovery. The goal of the process is to separate various fractions differing in grain density, size and shape and/or bed friction factor. The oscillating water table 1.7 with vibrating-bumper drive is a device which separates the material in a pulsating stream of operating medium, i.e. water, flowing down a slightly inclined surface of the table, which moves in a reciprocating motion in the horizontal plane, in the direction perpendicular to the direction of the water flow. The moving plate of the table is also vibrating from the drive via an eccentric coupling. The regulation of vibration frequency is achieved through the change of rotation speed of the engine. The material in the form of an suspension, concentrate, is fed from the top in a corner of the table. Simultaneously, the operating medium is fed in - usually along the longer edge of the table. In enrichment of smaller fractions, tables with smooth surfaces are used. In enrichment of bigger fractions, the table is equipped with a row of parallel bars of equal height. Sometimes bars with height decreasing in the direction of inclination of the table are used. Alternatively, it is possible to use, in the place of bars, grooves of relevant depth, or both solutions at the same time; nevertheless, the most desirable effect is achieved with the use of bars. The parameters of the process are: density of the suspension, concentrate, volume of the operating medium fed into the system in a unit of time, the material composition of the suspension/concentrate, frequency forcing the vibration, inclination of the table's diagonal dimension, height of bars and/or depth of grooves. The materials after the separation are packed to Big Bag containers and labelled, and then transported to the ready product warehouse or the storage yard.

A side effect of the shredding process performed in a high-speed mill shredder and granulating mill in the process line for the recycling and recovery of materials: from small waste electric and electronic equipment, electric cables, antenna cables, electric bundles etc. and granulation and homogenization in a granulating mill in the process line for the recycling and recovery of materials from small waste electric and electronic equipment, is the generation of dusts and sediments, which generate a burden for the personnel and the natural environment, and contain inclusions of noble metals.

In order to reduce fly polluting substances originating from the process, especially polymers, and recovery of noble metal and non-metal inclusions, among others: copper, solder-coated copper, brass, silver, gold, platinum, iron, zinc, magnesium, the dust separation process is being performed in an ongoing manner, i.e. suction and binding of compounds present in the dust fraction with the help of a dust collecting installation 1.8. The sediment obtained in this way is directed to a set of at least two coupled oscillating water tables 1.7 with vibrating-bumper drive, closed-cycle infrastructure and operating medium recovery.

As a result of the works performed the following was produced: a concentrate of non-ferrous metals, among others such as copper, gold, silver, platinum, palladium, magnesium, tin which will be subject to a refining process in a metal refinery, as well as a polymer fraction consisting of plastics: thermoplastics, technical plastics, composites and elastomers, intended to be processed in specialized plastic processing plants.

The process line for the recycling of electric cables and bundles 2 executes this process in several stages. Stage 1 includes: detailed manual segregation, cleaning and sorting. Electric cables and bundles are sorted by type and metallic content. Such processed material is transported to an intermediary warehouse or directly, by a conveyor belt, to the process line for recycling of electric cables and bundles. The electric cables and bundles process line comprises a high-speed mill shredder 2.1, magnetic separator 2.2, granulator 2.3, feeder 2.5 supported by a fan 2.3, vibrating air separator 2.6, a set of wet oscillating tables 2.7 with vibrating-bumper drive, closed-cycle infrastructure and operating medium recovery, feeders. The next stage, should it be necessary, is the cutting of cables and bundles into pieces of relevant length, up to 3 metres, or milling in the shredder 2.1. The device is equipped with exchangeable sieves with round or rectangular openings the diameter (size) of which is selected depending on the type of desired size of the granules. In the shredder 2.1 the electric cables and bundles are milled to sections of length 5 to 50 mm. The mixture achieved through this process consists of ferrous metal, non-ferrous metal, and especially copper and polymer inclusions. The preliminarily processed material is directed to the feeder not shown in the picture, where the magnetic separator 2.2 is located. The magnetic separation occurs, as a result of which the ferrous metal inclusions, as an undesirable contamination, are separated from the main stream of material. The separated metallic inclusions are directed to a container located next to the feeder, and then stored in Big Bag containers to be further delivered to specialized processing plants. The preliminarily milled and purified from magnetic inclusions material is transported to the mill 2.3, where it is milled again to fraction of size 0.5 to 2 mm. The grain of the fraction is dependent on the sieve and the processed material: copper or aluminium. The resulting material constitutes a mixture of plastics with metal, sometimes also with paper, duct tape or dust. It is transported by the feeder 2.5 supported by a transporting fan 2.4 to the vibrating air separator 2.6. In the separator 2.6, due to the difference in density, the copper (aluminium) granules fraction is separated from plastics and potential contaminants. The separated fractions of copper, the mixture of plastics and other fractions are collected into bags. The dust originating from the process of milling of cables and bundles in a high-speed mill shredder 2.1, granulating mill 2.3 are sucked away through the dust collection installation 2.8 and transported to bag filters of the common duct collection installation. Then the copper/aluminium granules and the impurities collected from the fly contaminants reduction system are transported by an auger conveyor to the set of at least two coupled oscillating water tables 2.7 with vibrating-bumper drive, closed-cycle infrastructure and operating medium recovery through a feed. Light and medium fractions (in this case - dust and parts of plastic) are "washed" by the water from a sprinkler. The plastic and the dust sediment are transported by a stream of operating medium to the filtration system, where the purified polymer - fraction will be recovered. The granulated plastic is then funnelled to Big Bag containers, packaged and labelled, and then transported to the storage yard. Finally, the material will be directed to specialized processing plants or will be stored in a waste yard. The heavy fraction of pure granulated copper, as a result of perpendicular movement of the tables 2.7, is transferred to the sieve, where it is dried. Pure granulated copper is loaded by an augur conveyor to containers or Big Bag containers and then transported to ready product warehouse. As a result of the above activities, the granulated non-ferrous metal: copper (Cu), ferrous metals without polymer inclusions and a mixture of plastics, especially, polyvinyl chloride (PVC), polyethylene (PE) were obtained. Finally, separated waste material will be delivered to metal refineries: ferrous metals and non-ferrous metals: copper (Cu), whereas the polymer fraction will be delivered to specialized processing plants.

The segregated stream of waste consisting of CRT TV sets and monitors is transported on a conveyor belt to the Line 3 for recycling of CRT TV sets and monitors 3. The first operation is to perform a deep manual disassembly. The disassembly is performed at manual fragmentation stations 3.1 of a waste electric and electronic equipment, with the use of mechanical and electric tools. These operations are aimed at separating subassemblies, e.g. deflection coils, electric cables and bundles, printed circuit boards, plastic casings and covers, loudspeakers and cathode ray tubes. The separated fractions are then subjected to recycling in dedicated internal process lines 1 and 2. A cathode ray tube constitutes about 60-80% of mass of a device arid consists of two types of glass (borosilicate glass and lead glass) of different chemical composition. In the next phase the cathode ray tubes are directed to a station in which the screen glass is separated from the tube glass (the conical part) by mechanical cutting: cutting the screen from the cone, cutting the metallic band around the screen, selective disassembly. The airing of the cathode ray tube is performed, followed by the removal of a metal mask. The internal part of the cathode ray tube is covered with the so-called phosphor, containing metals, i.e. arsenic, lead, cadmium, chromium, copper, nickel, zinc. The phosphor is sucked out at the phosphor removal station, then stored and secured in specialized containers in order to be transported to specialized processing plants. The cullet from cathode ray tubes, acquired in this way: from the screen and cone part is stored in Big Bag containers to be later transported to specialized processing plants.

## Claims

1. The method of recycling and recovery of raw materials from home electronics and appliances and waste thereof, according to which the stored waste is sorted and divided into groups of small waste electric and electronic equipment, CRT and LCD TV sets and monitors, electric cables and bundles, batteries and cells, large waste electric and electronic equipment and remaining waste, after which the large waste electric and electronic equipment, batteries and cells and remaining waste is directed to specialized processing plants, whereas small waste electric and electronic equipment, CRT and LCD TV sets and monitors and electric cables and bundles are subjected to further processing operations, wherein the processing is performed in three cooperating process lines, i.e. in the line for processing small waste electric and electronic equipment, in the line for processing electric cables and bundles and in the line for processing CRT and LCD TV sets and monitors, whereas
- the small waste electric and electronic equipment directed to the small waste electric and electronic equipment processing line is shredded preliminarily to the size of 50 to 100 mm, then such shredded fraction is subjected to magnetic separation, during which the preliminary separation of ferrous metals takes place, and the remaining waste material is subjected to granulation to the size 20 to 30 mm and again is subjected to magnetic separation, after which the remaining waste material is milled and granulated to the size 8 to 20 mm and then subjected to eddy current separation, during which the aluminium fraction is separated, whereas the dust generated in the processes of granulation and milling of waste materials is removed by a dust collection installation, and later the collected dust and waste material generated in eddy current separation are subjected to wet separation on a set of coupled vibrating and oscillating tables, operating in closed cycle with recovery of the operating medium, as a result of which the polymer fractions and noble metals concentrate are separated and directed to specialized processing plants, whereas
- electric cables and bundles directed to the electric cables and bundles processing line are shredded to the size 5 to 50 mm, and later subjected to magnetic separation, during which the ferrous metallic fractions are separated, while the remaining waste material is milled and granulated to the size 0.5 to 2 mm, after which the granulated material is subjected to vibration air separation, during which the polymer fraction is separated, while the remaining waste material and dust collected during shredding, milling and separation are directed to dust collecting installation, and later thus collected dust and waste material generated in the eddy current separation are subjected to wet separation on a set of coupled vibrating and oscillating tables operating in closed cycle with recovery of the operating medium, as a result of which the polymer fractions and the purified granulated copper are recovered, which are then directed to specialized processing plants, whereas
- CRT and LCD TV sets and monitors are directed to the CRT and LCD TV sets and monitor recycling line, where they are manually disassembled, and the electric cables and bundles generated in this process are directed to the electric cables and bundles processing line, where they are subjected to further processing consistent with this invention, while the recovered small electric and electronic elements are directed to the small waste electric and electronic equipment recycling and recovery line, where they are subjected to further processing, the plastic casings and covers are directed to specialized processing plants, while the phosphor is sucked out of the screen part of cathode ray tubes and monitors, and the remaining cleaned glass is directed to specialized processing plants.

2. A method consistent with Claim 1, **characterized in that** the process of dust collection in the small waste electric and electronic equipment processing line and the electric cables and bundles processing line are performed centrally with a dust collection installation common for both lines.

3. A method consistent with Claim 1, **characterized in that** the process of wet separation on the small waste electric and electronic equipment processing line and the electric cables and bundles processing line is performed on a common station, in a coupled set of vibrating and oscillating tables operating in closed cycle, with the recovery of operating medium.

4. A process line for the recycling and recovery of raw materials from home electronics, home appliances and waste thereof, containing a line for pre-sorting and a line for mechanical processing of waste, equipped in shredding, separation, granulating devices as well as transporters and water washers, wherein the pre-sorting line is connected with three process lines, i.e. with a first line (1) for recycling and recovery of material from small waste electric and electronic equipment, with a second line (2) for the recycling of electric cables and bundles, and a third line (3) for the recycling of CRT TV sets and monitors, whereas the first line (1) and the second line (2) are connected by a central dust collection installation, containing lines (1.8, 2.8), and a common wet separation station, containing a set of coupled oscillating water tables (1.7, 2.7) whereas the third line (3) is connected with the first line (1) by a node for feeding waste material in the form of small electric and electronic parts to the second line (2) and is connected to the second line (2) by a node for feeding waste material in the form of electric bundles and cables to the second line (2).

5. Line consistent with Claim 4, **characterized in that** the small waste electric and electronic equipment recycling and recovery line (1) comprises a preliminary shredder (1.1) which is connected to a magnetic separator (1.2), which in turn is connected to a high-speed mill shredder (1.3), which in turn is connected with the next magnetic separator (1.4), which is connected with a granulating mill (1.5) which in turn is connected with an eddy current separator (1.6), which is connected with a set of at least two coupled oscillating water tables (1.7) with vibrating-bumper drive and closed-cycle circulation of the scrubbing medium.

6. A line consistent with Claims 4 and 5, **characterized in that** the mills (1.3) and (1.5) are connected to a common dust collection installation by the line (1.8), the dust from which is fed to a set of coupled oscillating water tables (1.7).

7. A line consistent with Claim 4, **characterized in that** the electric cables and bundles recycling line (2) contains a high-speed mill shredder (2.1), which is connected to a magnetic separator (2.2), which is connected to a granulating mill (2.3), which is connected to a feeder (2.5) supported by a fan (2.4), and the feeder (2.5) is connected with a vibrating air separator (2.6), which in turn is connected with a set of coupled oscillating water tables (2.7) with vibrating-bumper drive and a closed circuit circulation of the operating medium.

8. A line consistent with Claim 7, **characterized in that** the high-speed mill (2.1) and the vibrating air separator (2.6) are connected to the collective dust collecting installation by a line (2.8), the dust from which is fed to the set of coupled oscillating water tables (2.7).

9. A line consistent with Claim 4, **characterized in that** the line for the recycling of CRT TV sets and monitors (3) comprises at least one station for manual disassembly of parts (3.1) and segregation into cathode ray tubes, small electronic devices, electric cables and bundles and casings, whereas in the scope of small electronic elements this line is connected with the small electronic and electric equipment recycling and recovery line (1), while in the scope of electric cables and bundles this line is connected with the electric cables and bundles recycling line (2), while the recovered cathode ray tubes are transferred to the cone removal station, and later to the phosphor removal station, from where they are directed to the warehouse as cullet.

## Patentansprüche

1. Eine Methode zum Recycling und Wiedergewinnung von Rohstoffen aus der Unterhaltungselektronik und Haushaltsgeräten und ihren Abfällen, nach der die gelagerten Abfälle sortiert und in Gruppen geteilt werden wie verbrauchte elektrische und elektronische Kleingeräte, Fernsehgeräte und Bildröhren- und LCD-Monitore, Leitungen und Kabelbäume, Batterien und Zellen, verbrauchte große elektrische und elektronische Anlagen sowie sonstige Abfälle, wobei die verbrauchten großen elektrischen und elektronischen Anlagen, Batterien und Zellen und sonstige Abfälle anschließend spezialisierten Verarbeitungsbetrieben zugeführt werden, während die verbrauchten elektrischen und elektronischen Kleingeräte, Fernsehgeräte und Bildröhren- und LCD-Monitore sowie Leitungen und Kabelbäume einer weiteren Verarbeitung unterzogen werden, die auf drei zusammenarbeitenden technologischen Linien, d.h. einer Linie zur Verarbeitung verbrauchter elektrischer und elektronischer Kleingeräte, einer Linie zur Verarbeitung von Leitungen und Kabelbäumen und einer Linie zur Verarbeitung von Fernsehgeräten und Bildröhren- und LCD-Monitore, stattfindet, wobei
- die der Linie zur Verarbeitung verbrauchter elektrischer und elektronischer Kleingeräte zugeführten verbrauchten elektrischen und elektronischen Kleingeräte in Stücke mit Maßen 50 bis 100 mm zerkleinert und die zerkleinerte Fraktion einer magnetischen Separation unterzogen werden, bei der die E-Metalle abgetrennt werden, und das sonstige Abfallmaterial zur Körnung 20 bis 30 mm granuliert und erneut magentischer Behandlung unterzogen werden, nach der es wieder auf 8 bis 20 mm gemahlen und granuliert und anschließend einer Wirbelstrom-Separation unterzogen wird, in deren Laufe die Aluminium-Fraktion abgetrennt wird, während das beim Granulieren und Mahlen anfallende Pulver durch eine Entstaubungsinstallation abgeführt und gesammelt und zusammen mit dem infolge der Wirbelstrom-Separation gewonnenen Abfallmaterial einer Nass-Separation auf einem Satz gekoppelter Rüttel- und Schwenktische unterzogen wird, die im geschlossenen Zyklus mit Wiedergewinnung des Arbeitsmediums arbeiten, sodass die Polymere-Fraktionen und das Edelmetall-Konzentrat abgetrennt und spezialisierten Verarbeitungsbetrieben zugeführt werden können, während
- die der Linie zur Verarbeitung kleiner Leitungen und Kabelbäume zugeführten Leitungen und Kabelbäume auf ein Maß von 5 bis 50 mm zerkleinert und dann einer magnetischen Separation unterzogen werden, bei der die E-Metall-Fraktion abgetrennt wird, und das sonstige Abfallmaterial zur Körnung 0,5 bis 2 mm gemahlen und granuliert und anschließend einer Luft-Vibrations-Separation unterzogen wird, in deren Laufe die Polymere-Fraktion abgetrennt wird, während das sonstige Abfallmaterial und das beim Granulieren und Mahlen anfallende Pulver durch eine Entstaubungsinstallation abgeführt und gesammelt und zusammen mit dem infolge der Wirbelstrom-Separation gewonnenen Abfallmaterial einer Nass-Separation auf einem Satz gekoppelter Rüttel- und Schwenktische unterzogen wird, die im geschlossenen Zyklus mit Wiedergewinnung des Arbeitsmediums arbeiten, sodass die Polymere-Fraktionen und raffiniertes Kupfergranulat wiedergewonnen und dann spezialisierten Verarbeitungsbetrieben zugeführt werden können;
- Fernsehgeräte und Bildröhren- und LCD-Monitore der Recyclinglinie für Fernsehgeräte und Bildröhren- und LCD-Monitore zugeführt werden, wo sie manuell demontiert werden, wobei die in diesem Prozess anfallenden Leitungen und Kabelbäume zur Linie zur Verarbeitung von Leitungen und Kabelbäume gelangen, wo sie der weiteren Verarbeitung gemäß der Erfindung unterzogen werden, und die kleinen elektrischen und elektronischen Elemente zur Linie zum Recycling und Wiedergewinnung verbrauchter elektrischer und elektronischer Kleingeräte geschickt und dort einer weiteren Verarbeitung unterzogen werden;
- Gehäuse und Deckel aus Kunststoffen an spezialisierte Verarbeitungsbetrieben geliefert werden und der Phosphor von den Bildschirmmonitoren abgesaugt wird, während das gereinigte Glas spezialisierten Verarbeitungsbetrieben zugeführt wird.

2. Die Methode nach Anspruch 1 **dadurch gekennzeichnet, dass** der Entstaubungsprozess in einer Linie zur Verarbeitung verbrauchter elektrischer und elektronischer Kleingeräte der Linie zur Verarbeitung von Leitungen und Kabelbäumen zentral unter Verwendung einer für beide Linien gemeinsamen Entstaubungsinstallation stattfindet.

3. Die Methode nach Anspruch 1 **dadurch gekennzeichnet, dass** der Nass-Trennprozess in einer Linie zur Verarbeitung verbrauchter elektrischer und elektronischer Kleingeräte und der Linie zur Verarbeitung von Leitungen und Kabelbäumen in einer gemeinsamen Station auf einem Satz gekoppelter Rüttel- und Schwenktische durchgeführt wird, die im geschlossenen Zyklus mit Wiedergewinnung des Arbeitsmediums arbeiten.

4. Eine technologische Linie zum Recyceln und Wiedergewinnen von Rohstoffen aus der Unterhaltungselektronik, Haushaltsgeräten und deren Abfällen, bestehend aus einer Linie zur Vorsortierung und einer Linie zur mechanischen Verarbeitung der Abfälle, ausgestattet mit Zerkleinerungs-, Trenn- und Granulieranlagen sowie Förderern und Wasser-Spülmaschinen, wo
die Linie zur Vorsortierung mit drei technologischen Linien, d.h. der ersten Linie (1) zum Recycling und Wiedergewinnung des Materials aus verbrauchte elektrische und elektronische Kleingeräte, der zweiten Linie (2) zum von Recycling Leitungen und Kabelbäumen und der dritten Linie (3) zum Recycling von Fernsehgeräten und Bildröhren- und LCD-Monitoren, verbunden ist;
die erste Linie (1) und die zweite Linie (2) über eine zentrale Entstaubungsinstallation, die die Leitungen (1.8, 2.8) enthält, und die gemeinsame Nass-Trennstation verbunden ist, die einen Satz gekoppelter Wasser-Schwenktische (1.7, 2.7) enthält, während
die dritte Linie (3) mit der ersten Linie (1) über einen Knoten zur Zuführung des Abfallmaterials in Form kleiner elektrischer und elektronischer Teile der zweiten Linie (2) und mit der zweiten Linie (2) über einen Knoten zur Zuführung des Abfallmaterials in Form von Leitungen und Kabelbäumen der zweiten Linie (2) verbunden ist.

5. Die Linie nach Anspruch 4 **dadurch gekennzeichnet, dass** die Linie zum Recycling und Wiedergewinnung verbrauchter elektrischer und elektronischer Kleingeräte (1) einen Vorzerkleinerer (1.1) enthält, der mit dem magnetischen Abscheider (1.2) verbunden ist, der wiederum mit einer hochtourigen Zerkleinerungsmühle (1.3) verbunden ist, die ihrerseits mit einem weiteren magnetischen Abscheider (1.4) verbunden ist, der mit einer Granuliermühle (1.5) verbunden ist, die mit einem Wirbelstrom-Abscheider (1.6) verbunden ist, verbunden mit einem Satz aus mindestens zwei schwenkbaren Wassertischen (1.7) mit einem Antrieb der Vibrationsanschläge und einem geschlossenen Kreislauf des Spülmediums.

6. Die Linie nach den Ansprüchen 4 und 5 **dadurch gekennzeichnet, dass** die Mühlen (1.3) und (1.5) mit einer gemeinsamen Entstaubungsinstallation über die Leitung (1.8) verbunden sind, von der das Pulver dem Satz gekoppelter schwenkbarer Wassertische (1.7) zugeführt wird.

7. Die Linie nach Anspruch 4 **dadurch gekennzeichnet, dass** die Linie zum Recycling von Leitungen und Kabelbäumen (2) eine hochtourige Zerkleinerungsmühle (2.1) enthält, die mit dem magnetischen Abscheider (2.2) verbunden ist, der wiederum mit der Granuliermühle (2.3) verbunden ist, die mit der vom Ventilator (2.4) bedienten Aufgabevorrichtung (2.5) verbunden ist, die ihrerseits mit dem Luft-Vibrations-Abscheider (2.6) verbunden ist, verbunden mit einem Satz gekoppelter schwenkbarer Wassertische (2.7) mit einem Antrieb der Vibrationsanschläge und einem geschlossenen Kreislauf des Arbeitsmediums.

8. Die Linie nach Anspruch 7 **dadurch gekennzeichnet, dass** die hochtourige Mühle (2.1) und der Luft-Vibrations-Abscheider (2.6) mit der Sammel-Entstaubungsinstallation über die Leitung (2.8) verbunden ist, von der das Pulver dem Satz gekoppelter schwenkbarer Wassertische (2.7) zugeführt wird.

9. Die Linie nach Anspruch 4 **dadurch gekennzeichnet, dass** die Linie zum Recycling von Fernsehgeräten und Bildröhrenmonitoren (3) mindestens eine Station zur manuellen Demontage von Teilen (3.1) und zur Sortierung in Bildröhren, elektronische Kleingeräte, Leitungen und Kabelbäume und Gehäuse enthält, wobei im Bereich kleiner elektronischer Elemente diese Linie mit der Linie zum Recycling und Wiedergewinnung elektronischer und elektrischer Kleingeräte (1) verbunden ist, und im Bereich der Leitungen und Kabelbäume diese Linie mit der Linie zum Recycling von Leitungen und Kabelbäumen (2) verbunden ist, während die wiedergewonnenen Bildröhren zur Konusentfernungs-Station und anschließend zur Phosphorbeseitigungs-Station gebracht werden, von der sie als Scherben ins Lager gelangen.

## Revendications

1. Le recyclage et la valorisation des matières premières provenant de l'électronique domestique et des articles ménagers et de leurs déchets, selon lesquels les déchets sont triés et divisés en groupes de petits appareils électriques et électroniques usagés, de téléviseurs et de moniteurs CRT et LCD, de câbles et faisceaux électriques, de piles et batteries, de gros appareils électriques et électroniques usagés et autres déchets, après quoi les gros déchets d'équipements électriques et électroniques, de piles et de batteries et d'autres déchets sont envoyés vers des usines de traitement spécialisées, ainsi que les petits équipements électriques et électroniques, les téléviseurs, les écrans CRT et LCD et les fils et faisceaux électriques sont traités ultérieurement, où
est effectuée sur trois lignes technologiques coopérantes, à savoir une ligne de traitement des petits déchets d'équipements électriques et électroniques, une ligne de traitement des câbles et faisceaux électriques et une ligne de traitement des téléviseurs et des écrans CRT et LCD.
- les petits déchets d'équipements électriques et électroniques dirigés vers une ligne de traitement des petits déchets d'équipements électriques et électroniques sont d'abord broyés à une taille de 50 à 100 mm, puis la fraction broyée est soumise à une séparation magnétique, pendant laquelle a lieu la séparation initiale des métaux ferreux, les déchets restants sont granulés à une taille de 20 à 30 mm, puis à une séparation magnétique, le matériau restant étant broyé et granulé à une taille de 8 à 20 mm, et ensuite soumis à une séparation par courants de Foucault, au cours de laquelle la fraction d'aluminium est séparée et la poussière produite par la granulation et le broyage des déchets est éliminée par l'installation d'extraction des poussières, puis la poussière et les déchets collectés pendant la séparation par courants de Foucault sont soumis à une séparation humide sur un ensemble de tables vibratoires et caloriques couplées fonctionnant en cycle fermé avec récupération du fluide de travail, ce qui permet de séparer les fractions polymères et concentrats de métaux précieux, puis les déchets générés pendant cette séparation et ces derniers sont dirigés vers les usines spécialisées, pendant le processus, qui les séparent ensuite, les particules collectées et les déchets produits par les traitements spéciaux
- les fils électriques et les faisceaux dirigés vers une ligne de traitement pour petits fils électriques et faisceaux sont déchiquetés jusqu'à une taille de 5 à 50 mm, puis soumis à une séparation magnétique, au cours de laquelle la fraction ferreuse est séparée, le reste des déchets est broyé et granulé à une taille de 0,5 à 2 mm, puis le matériau granulaire est soumis à une séparation par vibration pneumatique, pendant laquelle la fraction polymère est séparée et les déchets et la poussière restant sont recueillis pendant le broyage, Le broyage et la séparation sont dirigés vers un système d'extraction des poussières, puis les poussières et les déchets produits pendant la séparation par courants de Foucault sont séparés par voie humide sur un ensemble de tables vibratoires-calcifères couplées fonctionnant en cycle fermé avec récupération du milieu de travail, ce qui permet la récupération des fractions polymères et du cuivre granulé purifié, qui sont ensuite acheminés vers des usines spécialisées,
- Les téléviseurs, les appareils d'affichage à tube cathodique et les moniteurs LCD doivent être envoyés sur une chaîne de recyclage des téléviseurs, des moniteurs à tube cathodique et des moniteurs LCD, où ils doivent être démontés à la main et les câbles et faisceaux électriques produits par ce procédé doivent être envoyés sur une chaîne de traitement des câbles et faisceaux électriques, où ils doivent être traités ultérieurement selon l'invention et les petits composants électriques et électroniques récupérés doivent être envoyés sur une chaîne de recyclage et de récupération des petits équipements électriques et électroniques usagés, où ils seront traités ultérieurement,
Les boîtiers et couvercles en plastique sont dirigés vers des installations de traitement spécialisées, le phosphore est aspiré hors de la partie écran des tubes cathodiques et des moniteurs, et le verre nettoyé restant est dirigé vers des installations de traitement spécialisées.

2. Méthode conforme à la réserve 1, c'est-à-dire que le processus d'extraction des poussières sur la ligne de traitement des petits équipements électriques et électroniques usagés et sur la ligne de traitement des fils et poutres électriques s'effectue de manière centralisée en utilisant une installation d'extraction des poussières commune aux deux lignes.

3. Méthode conforme à la réserve 1, c'est-à-dire que le processus de séparation par voie humide sur la ligne de traitement des petits déchets d'équipements électriques et électroniques et sur la ligne de traitement des fils et des faisceaux électriques est effectué à un poste commun, sur un ensemble couplé de tables vibrantes et calcifères en cycle fermé, avec récupération du milieu de travail.

4. Ligne de recyclage et de valorisation des produits électroniques domestiques, des articles ménagers et de leurs déchets, comprenant une ligne de préséparation et une ligne de traitement mécanique des déchets, équipées de broyeurs, de séparateurs, de broyeurs, de broyeurs et de convoyeurs et laveuses à eau, où
La ligne de préséparation est reliée à trois lignes de traitement, à savoir la première ligne (1) pour le recyclage et la récupération des matériaux des petits équipements électriques et électroniques usagés, la deuxième ligne (2) pour le recyclage des câbles et faisceaux électriques et la troisième ligne (3) pour le recyclage des téléviseurs et des appareils de visualisation CRT,
tandis que la première conduite (1) et la deuxième conduite (2) sont reliées par un système central d'extraction des poussières contenant les conduits (1.8, 2.8) et une station commune de séparation humide contenant un ensemble de nappes phréatiques à pendule couplé (1.7, 2.7), et que
la troisième ligne (3) est reliée à la première ligne (1) par l'intermédiaire d'un noeud pour alimenter la deuxième ligne (2) en déchets sous la forme de petites pièces électriques et électroniques et est reliée à la deuxième ligne (2) par l'intermédiaire d'un noeud pour alimenter la deuxième ligne (2) en déchets sous la forme de fils et faisceaux électriques.

5. Ligne conforme à l'article 4, **caractérisée par le fait que** la ligne de recyclage et de valorisation des petits équipements électriques et électroniques usagés (1) contient un broyeur primaire (1.1) qui est relié à un séparateur magnétique (1.2), lui-même relié à un broyeur rapide (1).3. qui est à son tour relié au séparateur magnétique suivant (1.4) qui est relié à un broyeur à granulés (1.5) qui est à son tour relié à un séparateur à courants de Foucault (1.6) qui est relié à un ensemble d'au moins deux nappes phréatiques (1.7) couplées avec un entraînement vibrant tampon et une boucle fermée pour le produit de rinçage.

6. Ligne selon les réserves 4 et 5, **caractérisée par le fait que** les broyeurs (1.3) et (1.5) sont reliés à un système commun d'aspiration des poussières par un conduit (1.8) à partir duquel les poussières sont acheminées vers un ensemble de nappes phréatiques couplées (1.7).

7. Ligne conforme à l'article 4, **caractérisée par le fait que** la ligne de recyclage des fils et faisceaux électriques (2) contient une meuleuse à grande vitesse (2.1) qui est reliée à un séparateur magnétique (2.2) qui est relié à une meuleuse granulaire (2.3) qui est reliée à une alimentation (2.3) qui est reliée à une alimentation (2.1).5. actionné par un ventilateur (2.4) et un dispositif d'alimentation (2.5) est relié à un séparateur air/vibrations (2.6) qui est à son tour relié à un ensemble de nappes phréatiques oscillantes couplées (2.7) avec un entraînement tampon vibrant et un circuit fermé du fluide à travailler.

8. Ligne conforme à l'article 7, **caractérisée par le fait que** le broyeur à grande vitesse (2.1) et le séparateur air/vibrations (2.6) sont reliés à un système collectif d'aspiration des poussières par un conduit (2.8) à partir duquel les poussières sont acheminées vers un ensemble de nappes phréatiques (2.7) reliées.

9. Ligne conforme à l'article 4 est **caractérisée par le fait que** la ligne de recyclage pour téléviseurs et écrans CRT (3) contient au moins une station de démontage manuel (3.(1) et la séparation en tubes cathodiques, petits appareils électroniques, fils et faisceaux et enveloppes électriques, et pour les petits composants électroniques, cette ligne est reliée à une ligne pour le recyclage et la récupération de petits appareils électroniques et électriques (1) et pour les fils et faisceaux électriques, cette ligne est reliée à une ligne pour le recyclage des fils et faisceaux électriques (2) et les tubes cathodiques récupérés sont transférés vers un poste de prélèvement de cône et ensuite vers un poste de prélèvement du phosphore à partir duquel ils sont envoyés à un magasin pour calcin.
